Europäisches Patentamt

European Patent Office

Office européen des brevets

(11) Numéro de publication: **0 371 180**
**A1**

## (12) DEMANDE DE BREVET EUROPEEN

(21) Numéro de dépôt: 88420396.9

(51) Int. Cl.5: **B65G 17/02, B65G 15/08**

(22) Date de dépôt: 25.11.88

(43) Date de publication de la demande:
06.06.90 Bulletin 90/23

(84) Etats contractants désignés:
AT BE CH DE ES FR GB GR IT LI LU NL SE

(71) Demandeur: **Mareau, Dominique**
**32, rue Clara Zetkin**
**F-38400 Saint Martin d'Heres(Isère)(FR)**

(72) Inventeur: **Mareau, Dominique**
**32, rue Clara Zetkin**
**F-38400 Saint Martin d'Heres(Isère)(FR)**

(74) Mandataire: **Perrier, Jean-Pierre et al**
**Cabinet GERMAIN & MAUREAU 12 rue de la**
**République**
**F-42000 St-Etienne(FR)**

(54) Installation de téléférage par bande souple conformable tubulairement.

(57) Dans cette installation comportant au moins un cable sans fin (2) de portage et de tractage, une bande transporteuse sans fin (1) portant les produits à transporter, des moyens donnant une configuration tubulaire à cette bande entre les stations extrêmes de chargement et de déchargement du produit, des moyens lui donnant une configuration plane au poste de renvoi à chacune de ces stations, des rouleaux (3a, 3b, 3c) de soutien de la bande dans la zone de changement de configuration et éventuellement des moyens de portage intermédiaires entre stations, les zones de bordures (1a-1b) de la bande souple (1) comportent, d'une part, des moyens longitudinaux complémentaires (21) d'accrochage circonférentiel et d'autre part, des moyens complémentaires (22) de verrouillage radial, tandis que chacune de ses stations extrêmes est munie, d'une part, d'un tambour (15) de renvoi de la bande ayant un axe vertical, et d'autre part, au poste de départ du transporteur, d'au moins un galet (4) rabattant sur le cable (2) l'une des zones de bordure (1a ou 1b) de la bande, d'au moins un galet redressant verticalement l'autre zone de bordure, d'au moins un galet rabattant cette dernière zone de bordure sur la première zone de bordure, coiffant déjà le cable, en assurant la liaison et le verrouillage de ces deux zones sur le cable (2), devenu intérieur.

FIG.6

Xerox Copy Centre

## Installation de téléférage par bande souple conformable tubulairement

L'invention est relative aux installations de téléférage servant au transport de produits en vrac ou pulvérulents et comportant au moins un cable sans fin, de portage et de tractage, une bande transporteuse sans fin portant les produits à transporter, des moyens donnant une configuration tubulaire à cette bande, entre des stations extrêmes de chargement et de déchargement du produit, des moyens lui donnant une configuration plane au poste de renvoi de chacune de ses stations, des rouleaux de soutien de la bande dans les zones de changement de configuration et, éventuellement, des moyens de portage intermédiaire entre les stations.

Le brevet allemand 970518 décrit une installation de ce type dans laquelle la liaison de la bande et du cable porteur est assurée par les éléments assurant la fermeture et la jonction des bords de cette bande, éléments qui sont respectivement solidaires de la bande et d'une chaine d'éléments indépendants de cette bande. A la station de chargement, les éléments de la chaine d'éléments s'insèrent individuellement entre les éléments de fermeture solidaires de la bande en assurant la liaison positive des deux bords de cette bande et en enserrant le cable porteur. Ce mode de liaison est onéreux car il fait appel à de nombreux éléments résistants et devant avoir des formes et dimensions précises. De plus, à l'usage, l'encrassement des éléments de fermeture perturbe la liaison des bords de la bande et l'accrochage de celle-ci au cable porteur.

Par ailleurs, l'enserrement complet du cable porteur, avec serrage radial de celui-ci, ne laisse aucune liberté de mouvement à ce cable alors que, précisément, en raison de sa structure multibrins toronnée, ce cable a naturellement tendance à vriller autour de son axe longitudinal. Il en résulte que le cable communique localement son vrillage à la courroie tubulaire qui prend, ainsi, dans le plan horizontal, une forme sinusoïdale perturbant les opérations d'ouverture et de fermeture de la bande.

Enfin, le poste de renvoi de la bande inclus dans chaque station extrême, met en oeuvre de nombreux rouleaux verticaux et horizontaux constituant une structure complexe, onéreuse, et consommatrice d'énergie. De plus, cette structure soumet les bords de la bande à des contraintes de pression sur les rouleaux et à des contraintes d'extension dans les trajectoires en hélice entre rouleaux perpendiculaires, c'est à dire à des efforts alternés qui favorisent la perte d'élasticité et l'usure prématurée de la bande.

La présente invention a pour but de fournir une installation du type précité remédiant à ces inconvénients, c'est à dire mettant en oeuvre une bande souple de géométrie simple, donc peu onéreuse, réduisant les contraintes sur cette bande pour en augmenter la longévité, procurant une fermeture sûre et étanche de la bande dans sa configuration tubulaire, assurant la liberté de vrillage du cable porteur et tracteur et comportant des stations extrêmes, simples et peu onéreuses.

Dans cette installation, les zones de bordurelongitudinales de la bande souple et sans fin comportent, d'une part, des moyens longitudinaux complémentaires d'accrochage circonférentiel et, d'autre part, des moyens complémentaires de verrouillage radial, tandis que chacune de ses stations extrêmes est munie d'une part, d'un tambour de renvoi de la bande, ayant un axe vertical, et d'autre part, au poste de départ du transporteur, d'au moins un galet rabattant sur le cable tracteur et porteur l'une des zones de bordure de la bande, d'au moins un galet redressant verticalement l'autre zone de bordure de la bande et d'au moins un galet horizontal rabattant cette dernière zone de bordure sur la première zone de bordure, coiffant déjà le cable, en assurant la liaison et le verrouillage de ces deux zones sur le cable, devenu intérieur.

Cette bande, qui présente au moins une bordure souple et élastique, est peu sensible aux déformations et aux contraintes qu'elle subit lorsqu'elle passe de sa configuration tubulaire à sa configuration plane, et inversement. Ces changements de configuration s'effectuent aisément avec des moyens simples et sans recours à aucun moyen extérieur. En outre, lorsque la bande est en configuration tubulaire, ses bordures, liées circonférentiellement avec verrouillage radial, assurent une fermeture très efficace ne nécessitant, dans l'intervalle entre les stations extrêmes, aucun moyen complémentaire extérieur pour confirmer cette fermeture, tels que des galets. Le cable disposé à l'intérieur de l'enveloppe tubulaire étanche, formée par la bande, est totalement protégé des intempéries et peut vriller librement sans transmettre son vrillage au transporteur.

D'autres caractéristiques et avantages ressortiront de la description qui suit en référence au dessin schématique annexé représentant à titre d'exemples non limitatifs, une forme d'exécution de cette installation et plusieurs formes d'exécution de la bande.

Figure 1 est une vue partielle en perspective montrant schématiquement la bande au poste assurant sa conformation tubulaire,

Figure 2 est une vue partielle en coupe transversale de la bande en conformation tubulaire pour une première forme d'exécution de cette bande,

Figures 3 et 4 sont des vues partielles en coupe montrant les deux bords de la bande lors de la mise en configuration tubulaire de celle-ci,

Figures 5 et 6 sont des vues partielles respectivement en plan par dessus et en perspective de la station de chargement,

Figures 7 et 8 sont des vues partielles, respectivement en plan par dessus et de côté en élévation de la station de déchargement,

Figure 9 est une vue partielle montrant de côté et en élévation une forme d'exécution des moyens de portage intermédiaire,

Figure 10 est une vue en coupe suivant X-X de figure 9 montrant, à échelle agrandie, les moyens de portage intermédiaires de l'un des brins du transporteur,

Figures 11 et 14 sont des vues similaires à la figure 2 mais montrant deux autres formes d'exécution de la bande,

Figures 12 et 13 et figures 15 et 16 sont des vues partielles en coupe, similaires aux figures 3 et 4, montrant les moyens pour redresser les zones de bordures respectivement de la bande de figure 11 et de celle de figure 14.

De façon connue, cette installation est composée d'une bande souple 1, d'un cable 2 de tractage et de portage tous les deux sans fin et décrivant une trajectoire fermée entre une station de chargement A et une station de déchargement B et réciproquement.

Selon l'invention, la bande 1 de section rectangulaire, de géométrie simple, comprend des zones de bordures longitudinales 1a et 1b munies de moyens d'accrochage réciproques comprenant des moyens d'accrochage circonférentiel désignés de façon générale par 21 et des moyens d'accrochage radial désignés de façon générale par 22.

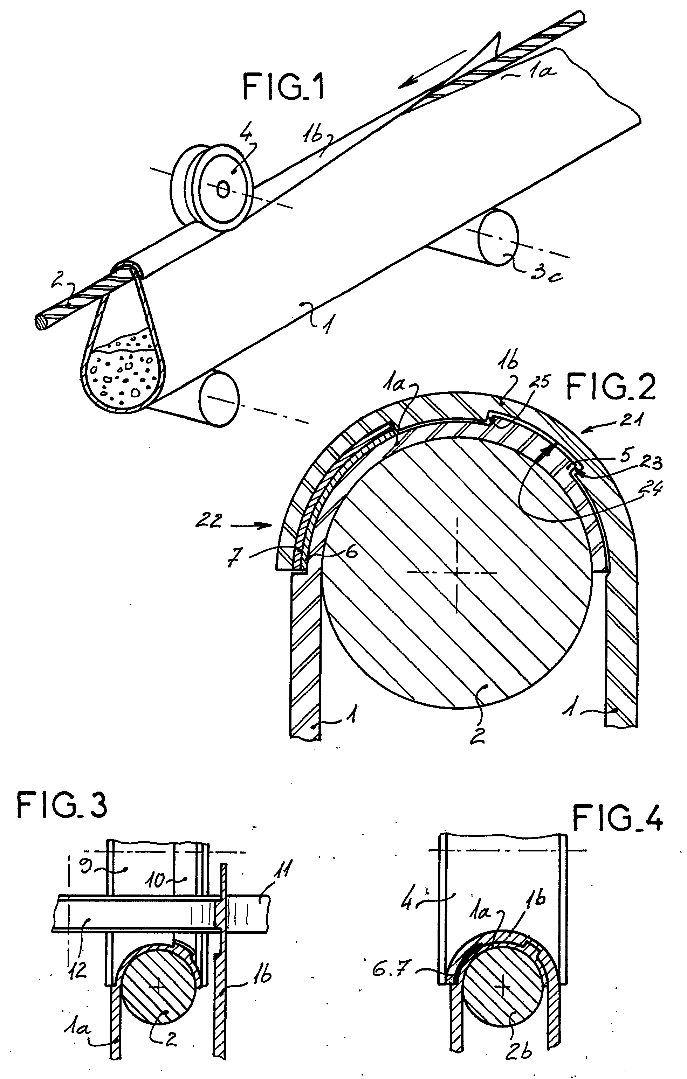

Dans la forme d'exécution représentée aux figures 2, 3 et 4, les moyens d'accrochage circonférentiel sont constitués par une nervure 5, saillant de la zone de bordures 1a et comportant des faces latérales radiales 23 constituant faces de butée et par une rainure 24 ménagée dans la zone de bordure 1b. Cette rainure comporte également des faces latérales radiales 25 constituant faces de butée. Les moyens d'accrochage radial sont constitués par deux plaques 6 et 7 se faisant vis à vis, solidaires, respectivement, de la zone de bordures 1a et de la zone de bordures 1b et comportant des moyens d'accrochage complémentaires. Ces deux plaques peuvent être constituées par des aimants souples ou comporter des moyens d'accrochage réciproques du type boucles et crochets en matière synthétique.

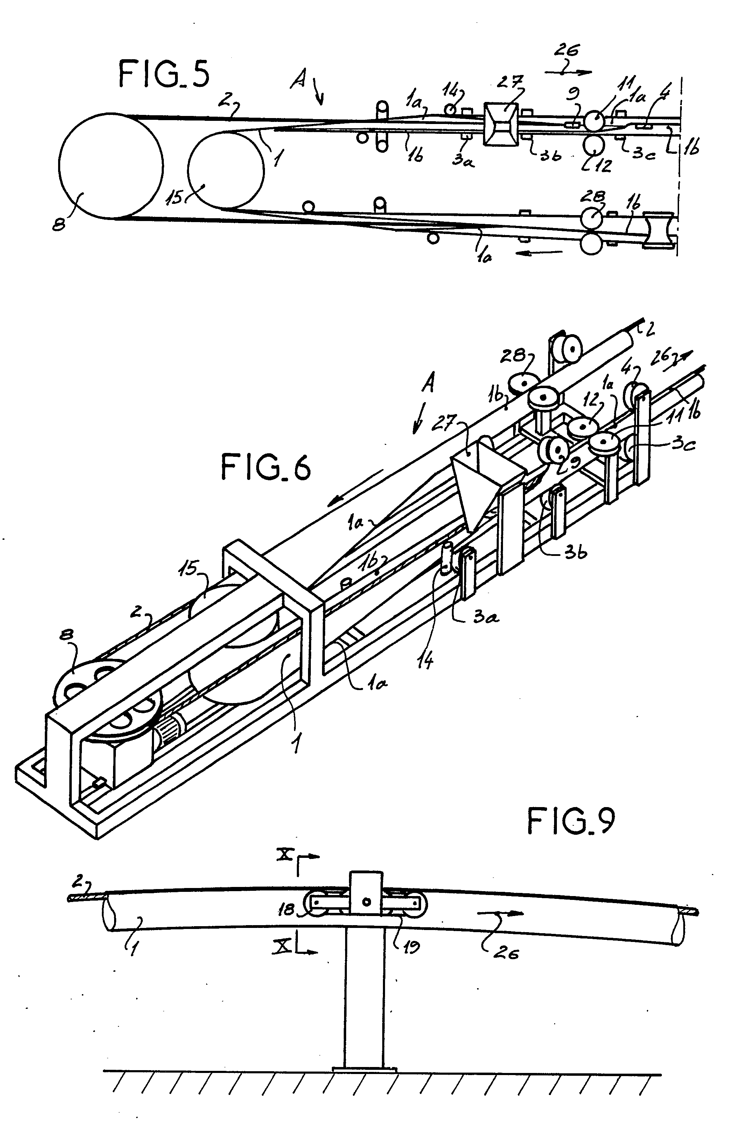

Comme le montre, les figures 5 et 6, chaque station extrême de l'installation comprend une poulie 8 de renvoi ou d'entrainement du cable 2, pivotant autour d'un axe vertical, et un tambour 15 de renvoi de la bande 1 pivotant également autour d'un axe vertical. Lorsque la bande 1 est en configuration plane autour du tambour de renvoi 15, sa zone de bordure 1a est disposée en partie supérieure et sa zone de bordure 1b est disposée en partie inférieure. En se déplaçant dans le sens de la flèche 26, la bande 1 parvient ainsi au poste de chargement comportant de façon connue des rouleaux de soutien horizontaux 3a-3b-3c, une trémie 27 d'alimentation en produits à transporter.

Selon l'invention, ce poste de chargement comporte également des moyens redressant la zone de bordures 1b qui est alors inférieure pour l'amener au dessus du cable 2 et le rabattre sur ce cable mais aussi des moyens pour rabattre la zone de bordures 1b sur la zone 1a précitée. Les moyens coopérant avec la zone de bordures 1a sont composés d'un rouleau vertical 14 disposé en amont de la trémie 27 et d'un rouleau horizontal 9 disposé en aval de cette trémie. Quant aux moyens coopérant avec la zone de bordures 1b, ils comprennent des rouleaux d'axes verticaux 11 et 12 et un rouleau 4 d'axe horizontal. Les rouleaux 11, 12 et 4 sont disposés en aval du rouleau 9.

En fonctionnement, la zone de bordure 1a est donc redressée par les rouleaux 14 et 9 qui l'amènent progressivement au dessus du cable 2 tandis qu'en même temps, la bande de bordure 1b est maintenue dans une position sensiblement verticale par les rouleaux 11 et 12. Lorsque la zone 1a passe sous le galet 9, elle est plaquée sur le cable 2 comme montré à la figure 3. Cette figure montre d'ailleurs que le galet 9 comporte une gorge 10 assurant le positionnement de la nervure 25 saillant de cette zone 1a, tandis que le galet 12 comporte une gorge 12a de positionnement de la nervure juxtaposée à la rainure 24 de la zone de bordures 1b. Par la suite la zone de bordure 1b est plaquée par le galet 4 sur la zone de bordure 1a comme le montre la figure 4. En quittant ce galet, et comme le montre la figure 1, la bande a une configuration tubulaire enveloppant totalement le cable 2 qui, étant intérieur à celle-ci, est protégé des intempéries et peut se vriller en toute liberté sans entrainer avec lui la bande. La figure 2 montre que, dans cette position, le créneau constitué par la nervure 25 engagée dans la rainure 24 assure la liaison circonférentielle des deux zones de bordure et que cette liaison est verrouillée par la liaison radiale assurée par les moyens 22. En raison de la qualité de cette fermeture, la bande ne nécessite pas, entre les deux stations de chargement et de déchargement, de quelconques moyens confirmant cette fermeture.

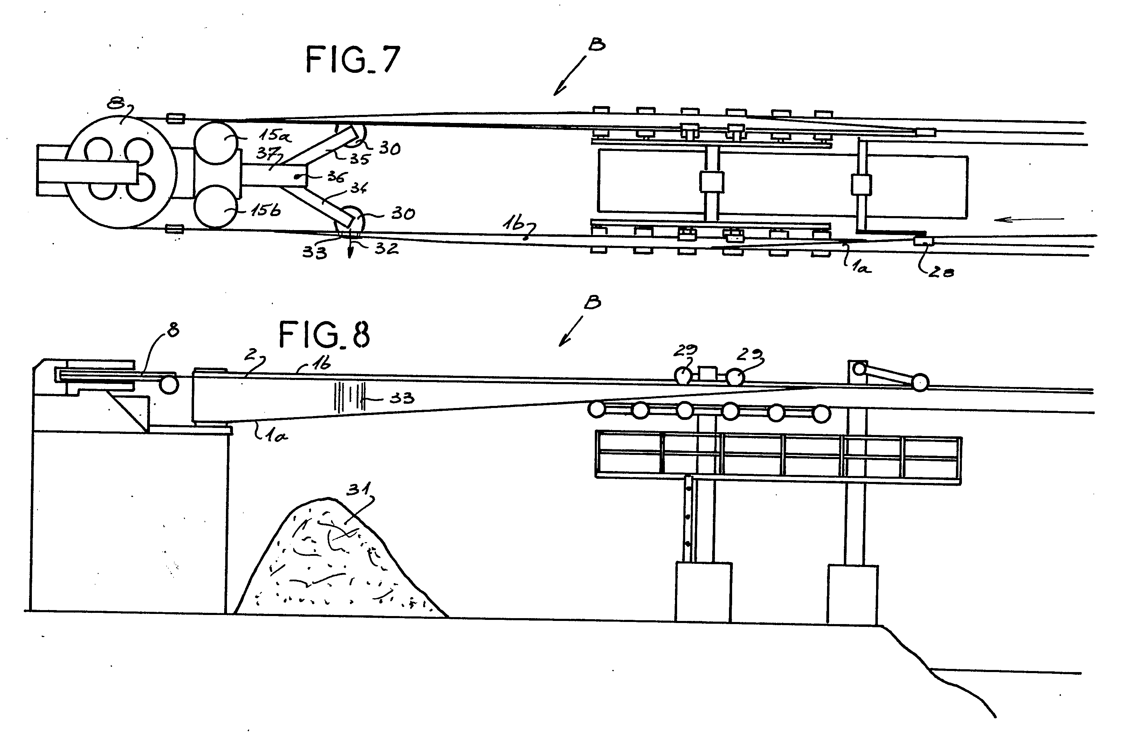

Au poste de déchargement, et comme montre figures 7 et 8, la bande 1 est ouverte par des galets 28 redressant la zone de bordure 1b tandis que la zone de bordure 1a est écartée progressivement du cable 2 pour revenir à la partie inférieure de la bande, lors du passage de celle-ci autour de l'autre tambour de renvoi 15. Dans la forme d'exécution représentée figure 7, l'unique tambour 15 des figures 5 et 6 est remplacé par deux tambours juxtaposés 15a-15b. De façon connue, ce changement de configuration de la bande permet au produit contenu dans celle-ci de tomber sur le sol pour former un tas 31 représenté à la figure 8. Avantageusement, le déchargement est aidé par un rouleau vertical 30 disposé entre les brins du transporteur et exerçant sur la bande une poussée transversale extérieure dans le sens de la flèche 32 l'obligeant à se déformer localement comme représenté en 33 figure 8. Cette déformation locale favorise le décolmatage de la bande et évite que des produits pulvérulents puissent y adhérer encore lorsqu'elle parvient au tambour de renvoi 15. La figure 7 montre que le rouleau 30 est articulé à l'extrémité d'un bras 34, solidaire d'un bras 35 portant un autre rouleau 30 qui, en prenant appui sur le brin de retour de la bande, assure l'équilibrage de la structure' de décolmatage. Les deux bras 34 et 35 sont articulés en 36 sur une partie 37 du châssis de la station de déchargement.

Les figures 6 et 8 montrent bien que, lors du passage de la conformation tubulaire à la conformation plane ou inversement, la zone de bordure 1a ne subit que des contraintes d'extension, ce qui, coompte tenu de la nature souple et élastique de la bande 1, n'est pas préjudiciable à la conservation de ces zones de bordures et à leur longévité. Ces deux vues montrent également que l'installation, selon l'invention, permet d'éviter comme dans la pratique courante, le retournement de la bande sur elle-même amenant le côté souillé, par le produit transporté, à l'intérieur du tube que forme la bande fermée en situation de retour vers l'autre station.

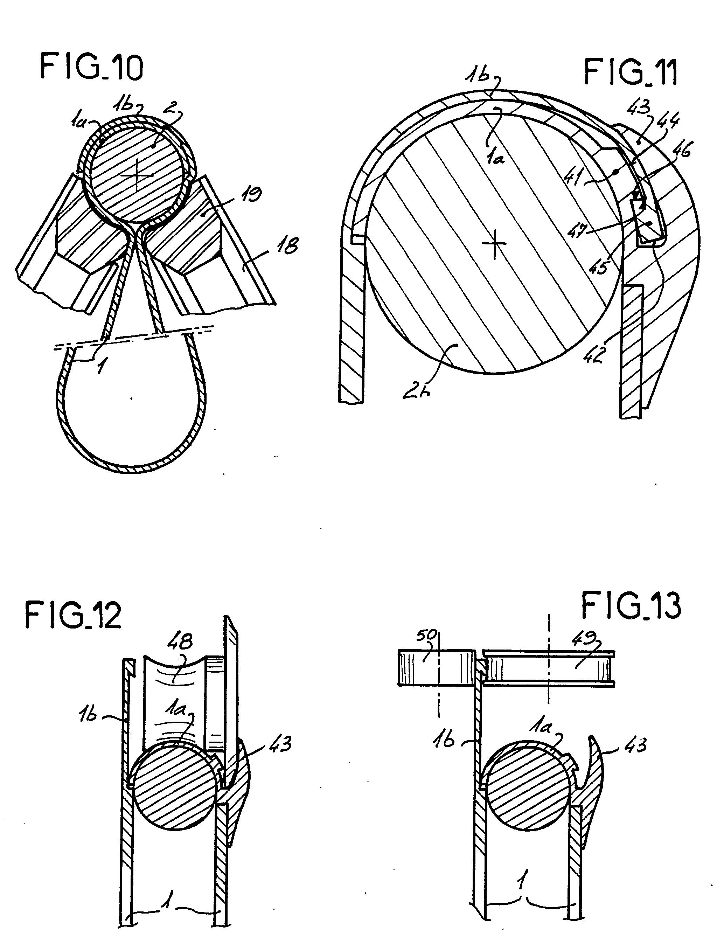

Lorsque les stations de chargement et de déchargement sont séparées par une distance importante, l'installation comporte également des moyens de portage intermédiaire. Dans la forme d'exécution représentée aux figures 9 et 10, ces moyens ccmprennent pour chacune des bandes, aller ou retour, et de chaque côté du cable, un ensemble de portage composé d'au moins deux poulies à gorge 18 espacées et reliées l'une à l'autre par une courroie 19.

La figure 10 montre que la face extérieure de la courroie 19 est concave en 40 et présente en particulier une cavité de rayon égal au rayon extérieur de la bande lorsqu'elle est plaquée contre le cable porteur 2. Cette figure montre bien que les poulies des deux ensembles de portage disposées de part et d'autre de la bande forment une sorte de V convergeant vers le haut et soutenant par dessous le cable 2 en plaquant contre lui la bande 1. Cette configuration procure une grande surface de contact et évite ainsi que la bande 1 ne supporte une forte pression pouvant la détériorer. La figure 9 montre que chaque ensemble de portage comporte quatre poulies mais il est évident que, en fonction des charges, ce nombre peut être augmenté ou réduit.

Dans une forme d'exécution préférée, au moins l'une des poulies 18 de chaque ensemble de portage est relié à des moyens moteurs aptes à l'entraîner en rotation afin que, lors de son passage, entre les deux ensembles de portage, la bande de téléférage soit soumise à un effort tendant à la faire avancer dans le sens de son déplacement. Cet agencement permet de réduire la puissance du moteur d'entrainement de la bande 1 et permet d'adapter la puissance transmise à la bande en fonction de la configuration de sa trajectoire entre les stations.

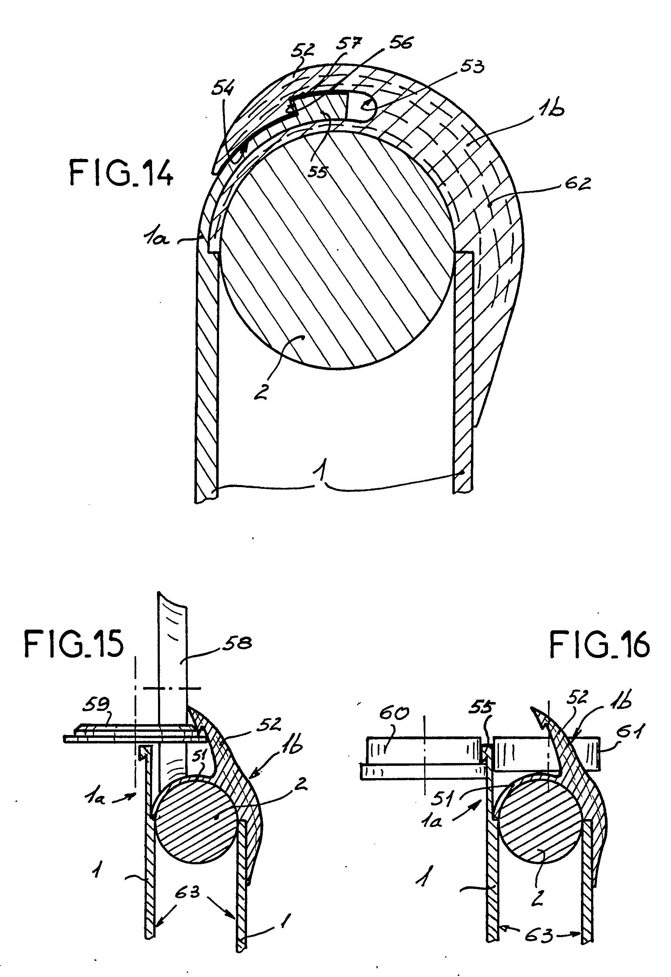

Dans la forme d'exécution représentée aux figures 11 à 13, la zone de bordure 1a comporte une nervure longitudinale 41, saillant extérieurement, et juxtaposée à une gorge longitudinale 42 et une barrette 43 élastique radialement vers l'extérieur et s'étendant au dessus de la gorge 42 et de la nervure 41 en ménageant un canal lamellaire 44. Ces diverses excroissances sont toutes situées sur la face de la bande qui est extérieure lorsque la bande est en configuration tubulaire, et qui est inférieure lorsqu'elle est en configuration plane, c'est à dire sur la face qui est la moins sensible aux salissures. La zone de bordure 1b comporte, à son extrémité, une poulie lamellaire apte à pénétrer dans le canal 44 et une nervure interne extrême 45 apte à pénétrer dans la gorge 42. Cette nervure 45 comporte une face de butée 46 apte à coopérer avec une face de butée 47 de la nervure 41.

Comme le montre les figures 12 et 13, au poste de mise en configuration tubulaire, la zone de bordure la coopère avec un galet 48 contribuant à son redressement, plaquant sa partie extrême sur le cable 2 et redressant élastiquement sa barrette 43, tandis que des galets 49 et 50 maintiennent redressés la zone de bordure 1b. En aval de ces galets 49-50, et dès qu'un galet presseur, du type de celui référencé 4 dans la forme d'exécution précédente, a rabattu la zone de bordures 1b sur la zone de bordures 1a, la barrette 43 revient par élasticité dans sa position représentée à la figure 11 en verrouillant par un effort radial de faible valeur, la liaison circonférentielle assurée par les faces de butée 46 et 47.

La figure 11 montre bien que, lorsque la bande est en configuration tubulaire, l'ensemble des moyens 21 d'accrochage circonférentiel et de ceux 22 de verrouillage radial, sont disposés d'un seul côté du cable 2.

Dans la forme d'exécution représentée aux figures 14 à 16, la zone de bordure 1b a la forme générale d'une crosse double dont la partie intérieure 51 est apte à coiffer le cable 2 et dont la partie extérieure 52 est constituée par une barrette élastique radialement. Cette barrette est séparée de la partie 51 par une gorge longitudinale 53 et par un canal lamellaire 54 débouchant longitudinalement. Avantageusement, cette zone de bordure 1b est moulée en forme dans un matériau élastique armé par des fibres orientées 62 tendant à la maintenir dans sa forme initiale et améliorant son rappel élastique lorsqu'elle a été déformée. La zone de bordure 1a, non armée et souple, comporte, à son extrémité, une nervure longitudinale externe 55, apte à pénétrer dans la gorge 53 et une partie lamellaire d'épaisseur égale à l'épaisseur du canal lamellaire 54. La nervure 55 comporte une face de butée 56 apte à coopérer avec une face de butée complémentaire 57 de la gorge 53.

Les figures 15 et 16 montrent qu'au poste de conformation tubulaire de la bande, des galets 58 et 59 assurent le plaquage sur le cable 2 de la partie intérieure 51 de la crosse et l'écartement de sa barrette élastique 52, tandis que des galets amont 60 et 61 maintiennent en position verticale la zone de bordure 1a. Après rabattement de la zone de bordure 1a contre la partie antérieure 51 de la zone 1b, et comme dans la forme d'exécution précédente, la barrette 52 revient élastiquement à sa forme d'origine en mettant en contact les faces de butée 56 et 57 assurant la liaison circonférentielle des deux bords de la bande et en assurant, par sa propre élasticité, le verrouillage radial de cette liaison.

Il faut noter qu'à la différence de la forme d'exécution précédente, c'est la zone de bordure en forme de double crosse, renforcée par une armature, qui reste en position supérieure dans les phases de changement de configuration, alors que c'est la zone de bordure souple 1a, comportant la nervure externe 55, qui décrit le mouvement en hélice dans ces phases de chargement de configuration. De ce fait, la face interne 63 de la bande venant en contact avec le produit à transporter, offre une surface continue sans décrochement, ce qui favorise l'évacuation du produit, évite son encrassement par ce dernier et garantit les conditions de liaison et de verrouillage des deux zones de bordures.

## Revendications

1. Installation de téléférage par bande souple conformable tubulairement du type comportant au moins un cable sans fin 2 de portage et de tractage, une bande transporteuse sans fin 1 portant les produits à transporter, des moyens donnant une configuration tubulaire à cette bande entre les stations extrêmes de chargement et de déchargement du produit, des moyens lui donnant une configuration plane au poste de renvoi à chacune de ces stations, des rouleaux 3a-3b-3c de soutien de la bande dans la zone de changement de configuration, et éventuellement des moyens de portage intermédiaires entre stations, caractérisée en ce que les zones de bordure 1a-1b de la bande souple 1 comportent, d'une part, des moyens longitudinaux complémentaires 21 d'accrochage circonférentiel et d'autre part, des moyens complémentaires 22 de verrouillage radial, tandis que chacune de ses stations extrêmes est munie, d'une part, d'un tambour 15 de renvoi de la bande ayant un axe vertical, et d'autre part, au poste de départ du transporteur, d'au moins un galet 4 rabattant sur le cable 2 l'une des zones de bordure 1a ou 1b de la bande, d'au moins un galet redressant verticalement l'autre zone de bordure, d'au moins un galet rabattant cette dernière zone de bordure sur la première zone de bordure, coiffant déjà le cable, en assurant la liaison et le verrouillage de ces deux zones sur le cable 2, devenu intérieur.

2. Installation selon la revendication 1, caractérisée en ce que la zone de bordure de la bande 1a qui vient la première coiffer le cable 2 comporte, sur sa face extérieure et en partant du bord de la bande, d'une part, au moins une nervure 5 en saillie à faces latérales radiales formant faces de butée et, d'autre part, des moyens de liaison par adhérence 6, tandis que l'autre zone de bordure 1b qui vient coiffer la zone précitée 1a sur le cable comporte, en vis à vis de cette autre zone, d'une part, au moins une rainure 24 apte à coiffer la nervure 5 précitée et, d'autre part, des moyens de liaison par adhérence 7 complémentaires de ceux de l'autre zone.

3. Installation selon la revendication 1, caractérisée en ce que la zone de bordure 1a de la bande qui vient la première coiffer le cable comporte, extérieurement, et sensiblement à l'opposé du bord de la bande par rapport au plan médian vertical du cable, d'une part, une nervure longitudinale 41, juxtaposée à une gorge longitudinale et dont la face 46, commune à la gorge, constitue face de butée circonférentielle, et, d'autre part, une barrette 43, élastique radialement, s'étendant au dessus de la gorge et de la nervure, en ménageant un canal lamellaire 44 pour l'autre zone de bordure 1b, tandis que l'autre zone de bordure 1b, venant coiffer la zone 1a sur le cable comporte, sur son bord longitudinal, une nervure intérieure 45 d'épaisseur supérieure à celle du canal lamellaire 44, apte à se loger dans la gorge 42 et présentant une face 46 de butée circonférentielle complémentaire de celle de la nervure de l'autre zone de bordure 1a.

4. Installation selon la revendication 1, caractérisée en ce que la zone de bordure 1b de la bande, qui venant la première coiffer le cable, a la forme générale d'une crosse double dont la partie intérieure 51 coiffe le cable 2 et dont la partie extérieure, constituée par une barrette 52, élastique radialement, est séparée de la partie intérieure 51 par une gorge longitudinale 53 disposée sensiblement de part et d'autre du plan médian vertical du cable, et par un canal lamellaire longitudinal 54, raccordé à la gorge précitée par une face de butée 57, tandis que l'autre zone de bordure 1acomporte, sur son bord longitudinal, une nervure longitudinale extérieure 55 qui, d'épaisseur égale à celle de la gorge 53, mais inférieure à celle du canal 54, présente une face 56 de butée circonférentielle, complémentaire de celle 57 de la barrette précitée.

5. Installation selon la revendication 4, caractérisée en ce que la zone de bordure 1b venant la première coiffer le cable, est moulée en forme dans un matériau élastique armé par des fibres orientées 62 assurant son rappel en forme.

6. Installation selon la revendication 1 et l'une quelconque des revendications 2 à 5, caractérisée en ce que, au poste d'éjection des produits, et dans sa phase de passage en configuration plane, la bande souple 1 passe sur au moins un rouleau 30, d'axe vertical, la déformant localement vers l'extérieur.

7. Installation selon la revendication 1 et l'une quelconque des revendications 2 à 6, caractérisée en ce que chacun des moyens de portage intermédiaires, disposés entre les stations extrêmes, est composé, pour chaque bande 1, aller ou retour, et de chaque côté du cable 2, d'un ensemble de portage constitué par au moins deux poulies à gorge 18, espacées longitudinalement, reliées l'une à l'autre par une courroie 19 dont la face extérieure est concave et dont le brin horizontal supérieur plaque la bande 1 contre la partie inférieure du cable porteur 2.

8. Installation selon la revendication 7, caractérisée en ce que l'une des poulies extrêmes 18 de chaque ensemble de portage, est liée à des moyens d'entrainement en rotation.

FIG.1

FIG.2

FIG.3

FIG.4

FIG.5

FIG.6

FIG.9

**FIG.7**

**FIG.8**

FIG.10

FIG.11

FIG.12

FIG.13

FIG.14

FIG.15

FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | DE-C- 970 518 (SCHAEFFER)<br>* Page 2, lignes 28-33; page 2, ligne 76 - page 3, ligne 5; page 3, lignes 32-50; figures 1-4 *<br>--- | 1,2 | B 65 G 17/02<br>B 65 G 15/08 |
| A | DE-B-1 016 190 (OPPEN)<br>* Colonne 1, lignes 36-49; figures *<br>--- | 1,2 | |
| A | DE-B-1 030 249 (KLEUSBERG)<br>* Colonne 1, lignes 38-46; colonne 2, lignes 26-29; colonne 2, ligne 53 - colonne 3, ligne 11; figures 1-4 *<br>--- | 1 | |
| A | GB-A-2 145 683 (NORCROS INVESTMENTS LTD)<br>* Page 1, lignes 5-8,82-120; page 2, lignes 6-18; figures *<br>--- | 1,2 | |
| A | FR-A-1 128 797 (SCHAEFFER)<br>* En entier *<br>--- | 1 | |
| A | FR-A-2 469 365 (HASHIMOTO)<br>* Page 1, lignes 1-3; page 3, lignes 24-33; page 4, lignes 1-4; page 7, lignes 1-8; figures 1-3,11 *<br>--- | 1,2 | DOMAINES TECHNIQUES RECHERCHES (Int. Cl.5)<br><br>B 65 G |
| A | GB-A- 709 701 (BULK PRODUCTS LTD)<br>* Page 2, lignes 63-78; page 3, lignes 64-74; figures 10-15 *<br>--- | 1,7 | |
| A | GB-A-1 351 132 (BTR INDUSTRIES LTD)<br>* Page 1, ligne 85 - page 2, ligne 10; page 2, lignes 44-49; figures *<br>----- | 1 | |

Le présent rapport a été établi pour toutes les revendications

| Lieu de la recherche | Date d'achèvement de la recherche | Examinateur |
|---|---|---|
| LA HAYE | 26-07-1989 | VAN DER ZEE W.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)